# EUROPÄISCHE PATENTSCHRIFT

(11) **EP 2 695 025 B1**
(45) Veröffentlichungstag und Bekanntmachung des Hinweises auf die Patenterteilung: **08.03.2017**
(21) Anmeldenummer: 11729942.0
(22) Anmeldetag: 21.06.2011
(51) Int. Cl.: G05B 19/042

(54) **VERFAHREN ZUR STEUERUNG EINER TECHNISCHEN VORRICHTUNG**
METHOD FOR CONTROLLING A TECHNICAL APPARATUS
PROCÉDÉ DE COMMANDE D'UN DISPOSITIF TECHNIQUE

(43) Veröffentlichungstag der Anmeldung: 12.02.2014
(73) Patentinhaber: Siemens Aktiengesellschaft, 80333 München (DE)
(72) Erfinder: HASSEL, Jörg, 91058 Erlangen (DE); KONOPKA, Frank, 90518 Altdorf (DE)
(86) Internationale Anmeldenummer: PCT/EP2011/060333
(87) Internationale Veröffentlichungsnummer: WO 2012/175114

(56) Entgegenhaltungen:
- EP-A1- 2 081 097

## Beschreibung

### Verfahren zur Steuerung einer technischen Vorrichtung

Die Erfindung betrifft ein Verfahren zur Steuerung einer technischen Vorrichtung.

Heute laufen viele technische Vorrichtungen, beispielsweise Klimaanlagen, hydraulische Systeme, Luftversorgungs- oder Absaugungsvorrichtungen, wegen eines potentiell erforderlichen Bedarfs ständig in einem Volllastbetrieb.

EP 2 081 097 A1 offenbart ein Verfahren und eine Vorrichtung zur Einsparung von Energie in einem Gebäude. Dabei werden die Anwesenheit einer Person und ein Energieverbrauch in dem Gebäude in Abhängigkeit von der Zeit erfasst und ausgewertet. Der Erfindung liegt die Aufgabe zugrunde, ein verbessertes Verfahren zur Steuerung einer technischen Vorrichtung anzugeben.

Die Aufgabe wird erfindungsgemäß durch die Merkmale des Anspruchs 1 gelöst.

Vorteilhafte Ausgestaltungen der Erfindung sind Gegenstand der Unteransprüche.

Bei dem erfindungsgemäßen Verfahren zur Steuerung einer technischen Vorrichtung wird über wenigstens einen Zeitraum ein zeitlicher Verlauf eines Energiebedarfs der technischen Vorrichtung ermittelt und ein Betriebszustand der technischen Vorrichtung zeitabhängig dem ermittelten Energiebedarf angepasst. Ein oder mehrere Energiebedarfsintervalle werden vorgegeben und diesen jeweils ein bestimmter Betriebszustand der technischen Vorrichtung zugeordnet. Anhand des ermittelten zeitlichen Verlaufs des Energiebedarfs werden regelmäßig wiederkehrende Zeitintervalle ermittelt, in denen der ermittelte Energiebedarf jeweils ständig innerhalb eines vorgegebenen Energiebedarfsintervalls liegt. Die technische Vorrichtung wird dann zu Beginn eines derartigen Zeitintervalls jeweils automatisch in denjenigen Betriebszustand versetzt, der dem jeweiligen Energiebedarfsintervall zugeordnet ist.

Betriebszustandes einer technischen Vorrichtung an deren tatsächlichen Energiebedarf. Die Ermittlung eines zeitlichen Verlaufs des Energiebedarfs ermöglicht es dabei insbesondere, regelmäßige Muster in dem zeitlichen Verlauf des Energiebedarfes zu erkennen und den Betriebszustand entsprechend zu steuern. Dies erhöht die Energieeffizienz des Betriebs der technischen Vorrichtung und verringert damit insbesondere die Betriebskosten. Ferner verlängert das Verfahren in der Regel auch die Nutzungsdauer der technischen Vorrichtung, indem sie deren Abnutzung verlangsamt.

Unter einem Energiebedarfsintervall wird dabei ein wenigstens einseitig beschränktes Intervall des Energiebedarfs verstanden. Insbesondere kann ein Energiebedarfsintervall also auch einseitig unbeschränkt sein. Die Intervallgrenzen der Energiebedarfsintervalle liefern Schwellenwerte des Energiebedarfs. Diese Schwellenwerte liefern über die Zuordnung von Betriebszuständen der technischen Vorrichtung zu den Energiebedarfsintervallen wiederum Schwellenwerte für Änderungen des Betriebszustandes, wenn zwei Energiebedarfsintervalle aneinander grenzen. Ein einseitig unbeschränktes Energiebedarfsintervall definiert dabei durch seine einzige Intervallgrenze höchstens einen Schwellenwert.

Die Ausgestaltung ermöglicht vorteilhaft eine systematische und automatisierte Anwendung des erfindungsgemäßen Verfahrens. Die Zuordnung von Betriebszuständen zu Energiebedarfsintervallen dient dabei der Definition von dem den jeweiligen Energiebedarf angepassten Betriebszuständen. Die Ermittlung von regelmäßig wiederkehrenden Zeitintervallen, in eines vorgegebenen Energiebedarfsintervalls liegt, ermöglicht es vorteilhaft, in dem ermittelten zeitlichen Verlauf des Energiebedarfs regelmäßige Strukturen zu erkennen und den Betrieb der technischen Vorrichtung auf die erkannten regelmäßigen Strukturen einzustellen, so dass in den ermittelten regelmäßig wiederkehrenden Zeitintervallen der Betriebszustand der technischen Vorrichtung jeweils dem entsprechenden Energiebedarf angepasst wird. Typische Beispiele solcher regelmäßig wiederkehrender Zeitintervalle sind Zeiten, in denen die technische Vorrichtung nicht verwendet wird oder mit verminderter Leistung betrieben wird, z. B. Wochenenden oder Nachtschichten, in denen nicht gearbeitet wird, oder regelmäßig wiederkehrende Wartungsschichten.

In dieser Ausgestaltung wird vorzugsweise wenigstens einem Energiebedarfsintervall ein Energiesparbetrieb der technischen Vorrichtung als Betriebszustand zugeordnet. Der Energiesparbetrieb ist beispielsweise ein Schlafmodus oder Ruhemodus der technischen Vorrichtung.

Dadurch kann die technische Vorrichtung automatisch in einen energiesparenden Betriebszustand versetzt werden, wenn der Energiebedarf entsprechend niedrig ist. Dadurch werden der Energieverbrauch und die Betriebskosten der technischen Vorrichtung besonders vorteilhaft gesenkt.

Weiterhin wird wenigstens einem Energiebedarfsintervall vorzugsweise ein ausgeschalteter Zustand der technischen Vorrichtung als Betriebszustand zugeordnet.

Dadurch kann die technische Vorrichtung automatisch vollständig abgeschaltet werden, wenn sie nicht benötigt wird. Dies führt zu einer weiteren vorteilhaften Senkung des Energieverbrauchs und der Betriebskosten der technischen Vorrichtung.

In einer weiteren zusätzlichen oder alternativen Ausgestaltung des Verfahrens wird wenigstens einem Ereignis ein einzustellender Betriebszustand zugeordnet. Ferner wird überwacht, ob dieses Ereignis eintritt, und die technische Vorrichtung wird beim Eintreten des Ereignisses automatisch in den dem Ereignis zugeordneten Betriebszustand versetzt. Auf diese Weise kann der Betriebszustand der technischen Vorrichtung automatisch beim Eintreten bestimmter Ereignisse verändert werden. Somit kann vorteilhaft auf Ereignisse reagiert werden, die eine Änderung des Betriebszustandes erfordern, beispielsweise ein "Aufwecken" der technischen Vorrichtung aus einem Energiesparbetrieb bei sich erhöhendem Energiebedarf, oder die eine vorteilhafte Änderung des Betriebszustandes ermöglichen, beispielsweise eine Versetzung der technischen Vorrichtung in einen Energiesparbetrieb bei einer Absenkung des Energiebedarfs.

Ein solches Ereignis kann beispielsweise ein sich verändernder Energieverbrauch eines mit der technischen Vorrichtung verbundenen Gerätes sein.

Dabei wird vorteilhaft ausgenutzt, dass ein sich verändernder Energieverbrauch eines angeschlossenen Gerätes ein Indikator für einen sich ändernden Energiebedarf der technischen Vorrichtung sein kann, der eine entsprechende Änderung des Betriebszustandes der technischen Vorrichtung erforderlich macht.

Ein Ereignis im Sinne der zweiten Ausgestaltung des Verfahrens kann ferner ein vorgegebenes Signal ist, das über ein Kommunikationssystem übertragen wird, beispielsweise über einen Datenbus, an den die technische Vorrichtung angeschlossen ist, oder über ein Datennetzwerk, mit dem die technische Vorrichtung verbunden ist.

Dabei wird vorteilhaft ausgenutzt, dass über ein KommunikationssystemSignale übertragen werden können, die einen sich ändernden Energiebedarf der technischen Vorrichtung signalisieren können. Derartige Signale können beispielsweise aus einem Leitsystem oder von anderen Vorrichtungen stammen und z. B. als Anstoß zum Einschalten der technischen Vorrichtung oder zum Aufwecken der technischen Vorrichtung aus einem Energiesparbetrieb dienen.

Ein Ereignis im Sinne der zweiten Ausgestaltung kann des Weiteren ein über eine vorgegebene Zeitdauer konstanter Energieverbrauch der technischen Vorrichtung sein.

Dabei wird vorteilhaft ausgenutzt, dass ein über eine längere Zeitdauer konstanter Energieverbrauch der technischen Vorrichtung einen entsprechenden Energiebedarf signalisieren kann und daher eine Versetzung der technischen Vorrichtung in einen diesem Energiebedarf entsprechenden Betriebszustand nahelegt. Wenn die technische Vorrichtung beispielsweise ein Motor oder Frequenzumrichter ist, kann sie auf diese Weise automatisch in einen Energiesparbetrieb versetzt werden, wenn sie längere Zeit nicht betrieben wurde.

Ein Ereignis im Sinne der zweiten Ausgestaltung kann auch ein manuell vorgegebener Zeitpunkt sein.

Dadurch kann die technische Vorrichtung vorteilhaft automatisch zu bestimmten Zeitpunkten in bestimmte Betriebszustände versetzt werden. Beispielsweise kann ein derartiger Zeitpunkt ein Beginn von Werksferien sein und die technische Vorrichtung bei dem Beginn der Werksferien automatisch abgeschaltet werden.

Abhängig vom jeweiligen Ereignis wird diesem als einzustellender Betriebszustand beispielsweise ein Energiesparbetrieb oder ein ausgeschalteter Zustand oder ein eingeschalteter Zustand der technischen Vorrichtung zugeordnet. Dadurch kann differenziert auf das jeweilige Ereignis und diesem entsprechend reagiert werden.

Die oben beschriebenen Eigenschaften, Merkmale und Vorteile dieser Erfindung sowie die Art und Weise, wie diese erreicht werden, werden klarer und deutlicher verstandlich im Zusammenhang mit der folgenden Beschreibung eines Ausführungsbeispiels, das im Zusammenhang mit einer Zeichnung näher erläutert wird. Dabei zeigt:

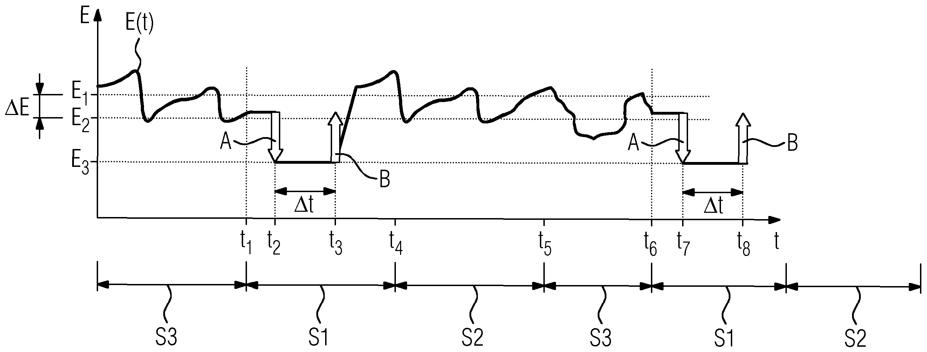

- FIG 1: einen zeitlichen Verlauf eines Energiebedarfs einer technischen Vorrichtung und Zeitintervalle eines Energiesparbetriebs der technischen Vorrichtung.

Bei der technischen Vorrichtung kann es sich dabei beispielsweise um eine Pumpe, z. B. eine Kühlmittel- oder Hydraulikpumpe, oder einen Verdichter handeln. Die spezifische Art und Ausbildung der technischen Vorrichtung ist für das erfindungsgemäße Verfahren aber tatsächlich weitgehend unerheblich. Allerdings findet das Verfahren besonders vorteilhafte Anwendungen auf Nebenvorrichtungen größerer technischer Anlagen, da die Nebenvorrichtungen im Gegensatz zu den größeren Anlagen zum Zwecke der ständigen Verfügbarkeit häufig permanent in einem unveränderten Betriebszustand betrieben werden, d. h. nicht abgeschaltet oder in einen Energiesparbetrieb versetzt werden.

Figur 1 zeigt einen zeitlichen Verlauf E(t) eines Energiebedarfs E der technischen Vorrichtung in Abhängigkeit von der Zeit t während dreier aufeinander folgender Tage.

Ferner ist ein entsprechender Schachtverlauf von Arbeitsschichten S1, S2, S3 in einem Betrieb dargestellt, in dem die technische Vorrichtung verwendet wird. Dabei bezeichnen S1 eine Nachschicht, S2 eine Frühschicht und S3 eine Spätschicht.

An einem ersten Tag endet die Spätschicht S3 zu einem ersten Zeitpunkt t₁, zu dem die darauf folgende Nachtschicht S1 beginnt. Auf diese Nachtschicht S1 folgt zu einem vierten Zeitpunkt t₄ die Frühschicht S2 eines zweiten Tages. Auf diese Frühschicht S2 folgt zu einem fünften Zeitpunkt t₅ die Spätschicht S3 des zweiten Tages, worauf zu einem sechsten Zeitpunkt t₆ wieder eine Nachtschicht S1 folgt und so weiter.

Während der Frühschichten S2 und der Spätschichten S3 schwankt der Energiebedarf E in Abhängigkeit von der Zeit t als Folge der wechselnden Anforderungen an die technische Vorrichtung. Insbesondere verlässt der Energiebedarf E während der Frühschichten S2 und der Spätschichten S3 jeweils mehrfach ein Energiebedarfsintervall ΔE, das von einer ersten Intervallgrenze E₁ und einer zweiten Intervallgrenze E₂ begrenzt wird.

Während der Nachtschichten S1 ist der Energiebedarf E der technischen Vorrichtung konstant, da die technische Vorrichtung dann nicht verwendet wird. Daher wird die technische Vorrichtung erfingdungsgemäß während der Nachtschichten S1 durch eine erste Betriebszustandsänderung A automatisch in einen Energiesparbetrieb versetzt, in dem der Energiebedarf E auf einen Minimalbedarf E₃ sinkt. Vor dem Ende jeder Nachtschicht S1 wird die technische Vorrichtung durch eine zweite Betriebszustandsänderung B aus dem Energiesparbetrieb "aufgeweckt", so dass sie wieder voll betriebsbereit ist. Dadurch steigt ihr Energiebedarf E wieder an. Die zweite Betriebszustandsänderung kann dabei automatisch oder manuell veranlasst werden. Ebenso können die Zeitpunkte t₃, t₈, zu denen die zweite Betriebszustandsänderung B jeweils vorgenommen wird, automatisch oder manuell bestimmt werden.

Erfindungsgemäß wird die Energiesparmöglichkeit während der Nachtschichten S1 dabei erkannt, indem über einen mehrtägigen Zeitraum hinweg ein zeitlicher Verlauf E(t) des Energiebedarfs E der technischen Vorrichtung ermittelt und ausgewertet wird. Zur Auswertung wird das Energiebedarfsintervall ΔE vorgegeben und diesem der Energiesparbetrieb als Betriebszustand der technischen Vorrichtung zugeordnet. Bei der Auswertung wird erkannt, dass der Energiebedarf E während eines regelmäßig wiederkehrenden Zeitintervalls Δt in den Nachtschichten S1 immer innerhalb des Energiebedarsintervalls ΔE liegt. Daraus wird geschlossen, dass die technische Vorrichtung während dieses Zeitintervalls Δt in den Energiesparbetrieb versetzt werden kann. Dementsprechend wird die technische Vorrichtung jeweils zu Zeitpunkten t₂, t₇ zu Beginn des Zeitintervalls Δt in den Energiesparmodus versetzt.

Obwohl die Erfindung im Detail durch ein bevorzugtes Ausführungsbeispiel näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

### Bezugszeichenliste

- A: erste Betriebszustandsänderung
- B: zweite Betriebszustandsänderung
- E: Energiebedarf
- E(t): zeitlicher Verlauf
- ΔE: Energiebedarfsintervall
- E₁: erste Intervallgrenze
- E₂: zweite Intervallgrenze
- E₃: Minimalbedarf
- S1: Nachtschicht
- S2: Frühschicht
- S3: Spätschicht
- t: Zeit
- Δt: Zeitintervall
- t₁ bis t₈: Zeitpunkte

## Patentansprüche

1. Verfahren zur Steuerung einer technischen Vorrichtung, bei dem über wenigstens einen Zeitraum ein zeitlicher Verlauf (E(t)) eines Energiebedarfs (E) der technischen Vorrichtung ermittelt wird und ein Betriebszustand der technischen Vorrichtung zeitabhängig dem ermittelten Energiebedarf (E) angepasst wird, wobei
- ein Energiebedarfsintervall (ΔE) vorgegeben und diesem ein bestimmter Betriebszustand der technischen Vorrichtung zugeordnet wird,
- wenigstens ein regelmäßig wiederkehrendes Zeitintervall (Δt) ermittelt wird, in dem der ermittelte Energiebedarf (E) ständig innerhalb des vorgegebenen Energiebedarfsintervalls (ΔE) liegt, und
- die technische Vorrichtung zu Beginn eines derartigen Zeitintervalls (Δt) automatisch in denjenigen Betriebszustand versetzt wird, der dem jeweiligen Energiebedarfsintervall (ΔE) zugeordnet ist.

2. Verfahren nach Anspruch 1,
**dadurch gekennzeichnet, dass** dem Energiebedarfsintervall (ΔE) ein Energiesparbetrieb der technischen Vorrichtung als Betriebszustand zugeordnet wird.

3. Verfahren nach Anspruch 1, **dadurch gekennzeichnet, dass** dem Energiebedarfsintervall (ΔE) ein ausgeschalteter Zustand der technischen Vorrichtung als Betriebszustand zugeordnet wird.

4. Verfahren nach einem der vorhergehenden Ansprüche,
**dadurch gekennzeichnet, dass**
- einem Ereignis ein einzustellender Betriebszustand zugeordnet wird,
- überwacht wird, ob das Ereignis eintritt, und
- die technische Vorrichtung beim Eintreten des Ereignisses automatisch in den dem Ereignis zugeordneten Betriebszustand versetzt wird.

5. Verfahren nach Anspruch 4,
**dadurch gekennzeichnet, dass** das Ereignis ein sich verändernder Energieverbrauch eines mit der technischen Vorrichtung verbundenen Gerätes ist.

6. Verfahren nach Anspruch 4,
**dadurch gekennzeichnet, dass** das Ereignis ein vorgegebenes Signal ist, das über ein Kommunikationssystem übertragen wird.

7. Verfahren nach Anspruch 4,
**dadurch gekennzeichnet, dass** das Ereignis ein über eine vorgegebene Zeitdauer konstanter Energieverbrauch der technischen Vorrichtung ist.

8. Verfahren nach einem der Ansprüche 4 bis 7,
**dadurch gekennzeichnet, dass** dem Ereignis als einzustellender Betriebszustand ein Energiesparbetrieb oder ein ausgeschalteter Zustand der technischen Vorrichtung zugeordnet wird.

9. Verfahren nach einem der Ansprüche 4 bis 7,
**dadurch gekennzeichnet, dass** dem Ereignis als einzustellender Betriebszustand ein eingeschalteter Zustand der technischen Vorrichtung zugeordnet wird.

## Claims

1. Method for controlling a technical apparatus, in which a time profile (E(t)) of an energy demand (E) of the technical apparatus is determined from at least one period, and an operating state of the technical apparatus is adapted to the determined energy demand (E) as a function of time, wherein
- an energy demand interval (ΔE) is prescribed and is assigned a specific operating state of the technical apparatus,
- at least one regularly recurring time interval (Δt) is determined in which the determined energy demand (E) is permanently within the prescribed energy demand interval (ΔE), and
- at the beginning of such a time interval (Δt) the technical apparatus is automatically put into that operating state which is assigned to the respective energy demand interval (ΔE).

2. Method according to Claim 1, **characterized in that** an energy-saving operation of the technical apparatus is assigned to the energy demand interval (ΔE) as the operating state.

3. Method according to Claim 1, **characterized in that** a shutdown state of the technical apparatus is assigned to the energy demand interval (ΔE) as the operating state.

4. Method according to one of the preceding claims, **characterized in that**
- an operating state to be set is assigned to an event,
- it is monitored whether the event occurs, and
- upon the occurrence of the event, the technical apparatus is automatically put into the operating state assigned to the event.

5. Method according to Claim 4, **characterized in that** the event is a varying energy consumption of a device connected to the technical apparatus.

6. Method according to Claim 4, **characterized in that** the event is a prescribed signal which is transmitted via a communication system.

7. Method according to Claim 4, **characterized in that** the event is an energy consumption of the technical apparatus that is constant over a prescribed duration.

8. Method according to one of Claims 4 to 7, **characterized in that** the event is assigned an energy-saving operation or a shutdown state of the technical apparatus as the operating state to be set.

9. Method according to one of Claims 4 to 7, **characterized in that** the event is assigned a shutdown state of the technical apparatus as the operating state to be set.

## Revendications

1. Procédé de commande d'un dispositif technique, selon lequel, durant au moins un intervalle de temps, une variation dans le temps (E(t)) d'une demande d'énergie (E) du dispositif technique est déterminée et un état de fonctionnement du dispositif technique est adapté en fonction du temps à la demande d'énergie (E) déterminée, dans lequel
- un intervalle de demande d'énergie (AE) est prédéfini et auquel est associé un état de fonctionnement déterminé du dispositif technique,
- au moins un intervalle de temps (Δt) périodique récurrent est déterminé, durant lequel la demande d'énergie (E) déterminée se trouve constamment dans l'intervalle de demande d'énergie (ΔE) prédéfini, et
- au début d'un tel intervalle de temps (Δt), le dispositif technique est automatiquement mis dans l'état de fonctionnement associé à l'intervalle de demande d'énergie (ΔE) respectif.

2. Procédé selon la revendication 1,
**caractérisé en ce qu'**un mode d'économie d'énergie du dispositif technique est associé comme état de fonctionnement à l'intervalle de demande d'énergie (ΔE).

3. Procédé selon la revendication 1,
**caractérisé en ce qu'**un mode éteint du dispositif technique est associé comme état de fonctionnement à l'intervalle de demande d'énergie (ΔE).

4. Procédé selon l'une des revendications précédentes,
**caractérisé en ce que**
- un état de fonctionnement à choisir est associé à un événement ;
- on surveille si l'événement se produit, et
- lorsque l'événement se produit, le dispositif technique est automatiquement mis dans l'état de fonctionnement associé à l'événement.

5. Procédé selon la revendication 4,
**caractérisé en ce que** l'événement est une consommation d'énergie variable d'un appareil relié au dispositif technique.

6. Procédé selon la revendication 4,
**caractérisé en ce que** l'événement est un signal prédéfini, transmis via un système de communication.

7. Procédé selon la revendication 4,
**caractérisé en ce que** l'événement est une consommation d'énergie, constante sur une durée prédéfinie, du dispositif technique.

8. Procédé selon l'une des revendications 4 à 7,
**caractérisé en ce que** un mode d'économie d'énergie ou un mode éteint du dispositif technique est associé comme état de fonctionnement à choisir à l'événement.

9. Procédé selon l'une des revendications 4 à 7,
**caractérisé en ce que** un mode allumé du dispositif technique est associé comme état de fonctionnement à choisir à l'événement.
